**Europäisches Patentamt**

(19) **European Patent Office**

**Office européen des brevets**

(11) Publication number: **0 083 144**
**B1**

(12) # EUROPEAN PATENT SPECIFICATION

(45) Date of publication of patent specification: **16.09.87**     (51) Int. Cl.⁴: **G 01 F 1/84**

(21) Application number: **82300809.9**

(22) Date of filing: **17.02.82**

(54) Improved method and apparatus for mass flow measurement.

(30) Priority: **17.02.81 US 235268**

(43) Date of publication of application:
**06.07.83 Bulletin 83/27**

(45) Publication of the grant of the patent:
**16.09.87 Bulletin 87/38**

(84) Designated Contracting States:
**BE CH DE FR GB IT LI NL SE**

(56) References cited:
**FR-A-2 449 872**
**US-A-3 355 944**
**US-A-4 127 028**
**US-A-4 187 721**
**US-A-4 192 184**

(73) Proprietor: **MICRO MOTION INCORPORATED**
**7070 Winchester Circle**
**Boulder Colorado 80301 (US)**

(72) Inventor: **Smith, James Everett**
**5291 Idylwild Trail,**
**Boulder, Colorado 80307 (US)**

(74) Representative: **De Minvielle-Devaux, Ian**
**Benedict Peter et al**
**CARPMAELS & RANSFORD 43, Bloomsbury**
**Square**
**London WC1A 2RA (GB)**

Courier Press, Leamington Spa, England.

# 0 083 144

**Description**

The present invention relates generally to flow measuring devices and methods utilising curved, including U-shaped conduits solidly mounted in beamlike, cantilevered fashion, and more particularly to a sensor and circuitry arrangement utilised with such flow measuring devices to substantially enhance the accuracy, stability and versatility of such devices.

The present invention, which provides a heretofore unavailable improvement over known mass flow measuring concepts, comprises a sensor and circuitry arrangement for use with continuous, curved, preferably U-shaped tubes mounted in beamlike fashion, for example as described in U.S. patent 4187721. The present sensors provide for accurate determination of Coriolis forces by outputting analogue signals. This is in contrast to the sensors previously employed which outputted digital signals referenced to physical structures attached to the flow meter's mounting platform, which digital signals were, therefore, essentially referenced to "static" structures with respect to the oscillating conduit over time periods of the order of a cycle. Avoiding such digital reference to "static" physical structures eliminates the need for manual compensation necessitated by variations in the physical characteristics of the meter's structure and its curved conduit caused by fluctuations in the ambient conditions, for example temperature and fluid flow pressure.

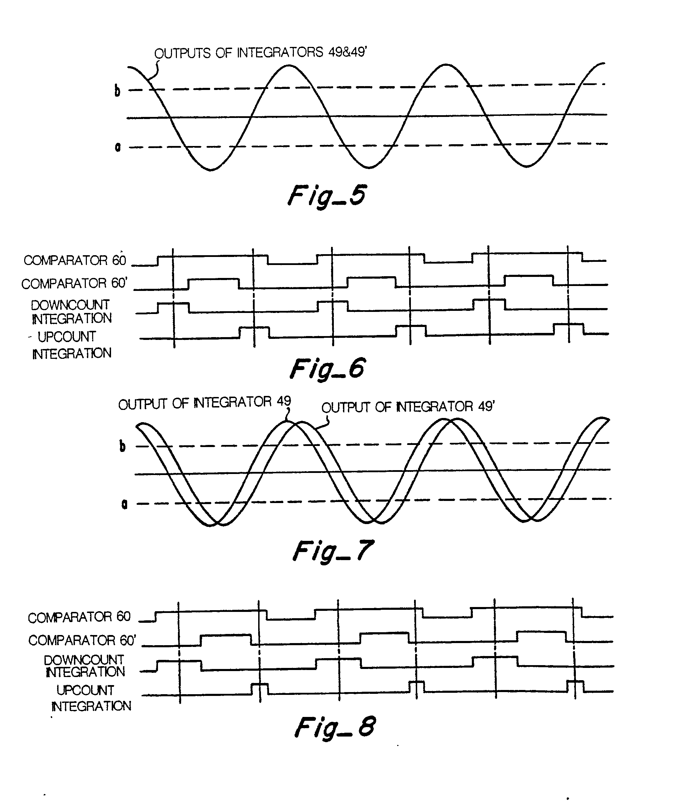

United States patent specification 4127028 mentions the possible use of magnetic velocity sensors without describing their characteristics. In context, the specification refers either to magnetic sensors that work in an "off/on" manner similar to the optical flag sensors described therein and in U.S. patent 4187721, to make a digital measurement at the midplane of oscillation in a flow meter comprising a solidly mounted continuous curved fluid conduit, or else to magnetic sensors to be used in a discontinuous, bellows-containing flow conduit arrangement as described in Sipin U.S. patent 3355944, especially the embodiment of Figures 8—10.

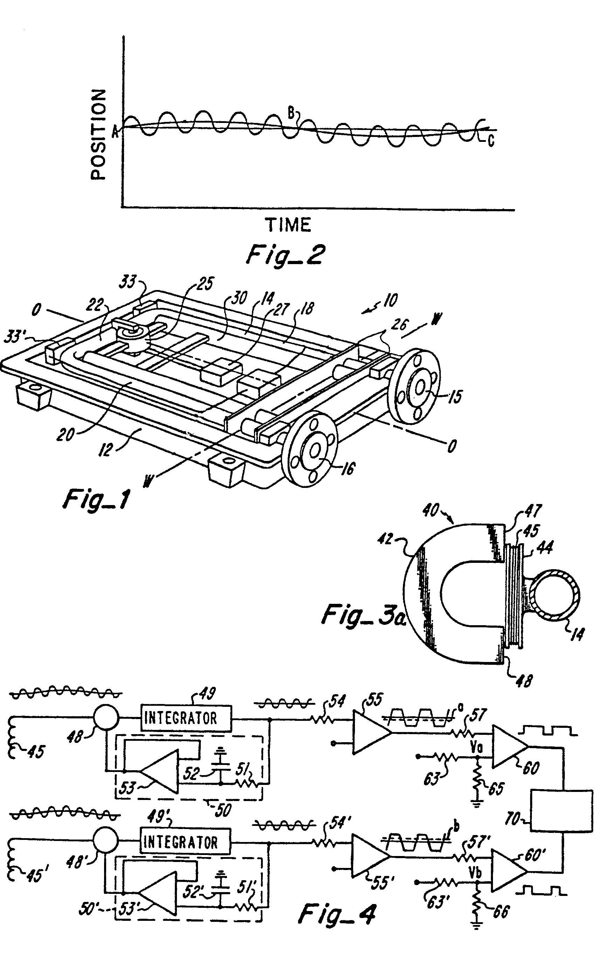

According to the present invention, velocity sensors are employed, to generate signals accurately corresponding to travel of the oscillating side legs of the curved conduit so that the time delay, caused by mass flow induced Coriolis forces, between the movement of the two legs of the oscillating conduit can be determined. As will be apparent from the following discussion, this technique for analogue measurement of the conduit movement as a function of velocity, is dynamic, i.e. without digital reference to a discrete physical structure that is "static" with respect to the oscillating conduit. Therefore, the analogue measurement is independent of long term structural fluctuations caused by changes in ambient conditions which have necessitated compensation in the position of the discrete "static" structures when operating Coriolis flow meters such as, for example, that shown in Figure 1 of U.S. patent 4187721. For the velocity sensor, this independence results from the fact that ambient induced warpage of the meter's structure is substantially smaller than the magnitude of the physical references for the sensor. These physical references are the volumetric extent of a uniform magnetic flux field used by the sensor and the conduitinduced velocity of a wire coil relative to the uniform magnetic flux field. In a preferred embodiment, each sensor signal is integrated at least once, and preferably a plurality of times, with each integrator's output returned to the integrator's input via a low frequency negative feedback circuit. This preferred embodiment minimises sensitivity to outside vibrations which induce harmonics in sensor output signals, cancels drift generated by the integrator circuit without affecting the phase of the sensor signal, and eliminates low frequency components in the sensor output signals, i.e., lower than the oscillation frequency at which the conduit is driven. Accordingly it is an object of the present invention to provide an improved apparatus and method for accurately measuring mass flow rate which is dependent on dynamics and not on "static" reference to a mechanical structure affixed to the flow meter's mounting platform, and which inherently compensates for structural fluctuations caused by changing ambient conditions.

Another object of the present invention is to provide an improved apparatus and method for accurately measuring mass flow rate which is insensitive to vibrations transmitted through the flow meter's structure such that the sensor output signals are affected.

Still another object of the present invention is to provide an improved apparatus and method for measuring mass flow rate which is substantially insensitive to environmental influences, such as temperature and ambient pressure.

Yet another object of the present invention is to provide an improved apparatus and method for measuring mass flow rate which may be operated in an explosive atmosphere.

The invention provides a Coriolis force mass flow rate meter comprising a continuous curved conduit, through which fluid is to be flowed, the conduit being solidly cantilever mounted at the open ends of leg portions thereof, which conduit is adapted to oscillate about an axis (W—W) passing substantially through the mounting points of the conduit such that, in use, fluid flow through the conduit gives rise to Coriolis forces tending to deflect the conduit about a deflection axis (O—O), further comprising a pair of magnetic velocity sensors disposed on opposed sides of the deflection axis, means electronically to detect signals from the sensors, and convert them to a mass flow rate value, and mass flow readout means, characterised in that the magnetic velocity sensors are each adapted to generate analogue signals linearly representative of the actual movement of respective sides of the conduit on opposed sides of the deflection axis over the range of movement thereof and the means to detect and convert the signals are adapted to determine,

2

from comparing the wave forms of the signals, the time delay between passage of the said respective sides of the conduit through a predetermined plane of the oscillation pathway of the conduit and to calculate mass flow rate therefrom.

The invention is illustrated by the drawings in which:

Figure 1 is a perspective view of a mass flow meter according to the present invention;

Figure 2 is a graphical representation of the movement of a typical oscillating conduit;

Figure 3a is a detailed view of the magnet-coil sensor structure of the flow meter of Figure 1 which depicts an arrangement with respect to the oscillating conduit which will be understood by those skilled in the art as only one of many acceptable arrangements;

Figure 3b is a detailed view of the same preferred magnet-coil velocity sensor arrangement of Figure 3a, showing the preferred physical size relationship between the coil and the pole faces of the magnet which those skilled in the art will readily understand, ensures coil development in a uniform magnetic flux field independent of both conduit oscillatory motion and long term conduit distortion due to ambient fluctuations;

Figure 4 is an electronic circuit diagram of the circuit employed with the sensor as illustrated in Figures 3a and 3b;

Figure 5 is a graphical representation of the substantially identical signals illustrated in Figure 2, after compensation for external error signals, ideally generated by the two sensors of the flow meter under no flow conditions;

Figure 6 is a timing diagram of the readout signals of the flow meter corresponding to the sensor output of Figure 5;

Figure 7 is a view similar to that of Figure 5 illustrating the sensor signals under a flow condition, and

Figure 8 is a timing diagram of the readout signals of the flow meter corresponding to the sensor output of Figure 7.

Turning now to the drawings, wherein like components are designated by like reference numerals throughout the various figures, a flow meter device according to a preferred embodiment of the present invention is illustrated in Figure 1 and generally designated by reference numeral 10. In many respects, flow meter 10 is similar to that described in U.S. patent 4187721. In that patent, the following features of flow meter 10 shown in Figure 1 are of particular relevance. Flow meter 10 includes mounting platform 12 to which a U-shaped conduit 14, free of pressure sensitive joints is mounted by means of conduit support structure 26 adjacent the inlet 15 and the outlet 16 ports in a cantilevered fashion for rotational oscillation. Side legs 18 and 20, as well as transverse connecting portion 22 extending therebetween, are provided. Preferably, drive mechanism 25, conventionally in the form of a magnet and coil, is carried on U-shaped conduit 14 and oscillating member 30, and activated by conventional drive circuit 27, to rotationally oscillate U-shaped conduit 14 about axis (W—W), with resulting Coriolis force deflection of U-shaped conduit 14 being about axis (O—O). Oscillating member 30 may take several forms, i.e. a single leaf spring, a "V" member mounted at the wide end or a rectangular structure as illustrated. What is of significant is that the oscillating member 30 have substantially the same resonant frequency as the U-shaped conduit 14 has when filled with fluid in the same density range as that of the fluid whose mass flow rate is to be determined, and that the two be mounted so as to be configured as a tuning fork. Accordingly, the U-shaped conduit 14 and the oscillating member 30 are driven by the drive mechanism 25 at their common resonant frequency. Also taught by U.S. patent 4187721 is that the resonant frequency of oscillation for U-shaped conduit 14 about axis (W—W) should be lower than the resonant frequency of oscillation about axis (O—O). This relationship ensures that the predominant force opposing the Coriolis force couple is the resilient spring distortion of the U-shaped conduit 14 about the (O—O) axis and thus obviates the need for, and the complication of, measuring velocity drag restorative forces and inertial opposing forces.

In the present invention signals from sensors 33 and 33' provide a linear analogue signal accurately describing the oscillatory motion of the U-shaped conduit 14. This is unlike previous embodiments, as shown in U.S. patent 4187721, in which deflection of U-shaped conduit 14 was measured by digitally sensing the passage of a fixed mechanical structure relative to the oscillating conduit at the mid-plane of oscillation. In the previous embodiments, by placing sensors on the legs, 18 and 20, of the U-shaped conduit 14, and locating the fixed structure which cooperates with the conduit mounted sensor portion to produce digital signals at the mid-plane of oscillation, the timing signals produced can be used to determine the time delay between passage of the legs 18 and 20 through the mid-plane of oscillation. As taught in U.S. patent 4187721, this time delay, when multiplied by constants dependent on the geometry of U-shaped conduit 14, equals the fluid mass flow rate through the conduit. It is the purpose of the present invention to utilise this same teaching but to determine the time delay of passage of the legs 18 and 20 by a unique method which increases accuracy.

The signal outputs of velocity sensors 33 and 33', will be better appreciated with reference to Figure 2. As shown, the position of U-shaped conduit 14 is plotted as the ordinate and time as the abscissa. Under ideal conditions, and particularly as contemplated by U.S. patent 4187721, "static" mid-point line A—C would constitute oscillation about the mid-plane. However, under a range of operating conditions which include temperature changes of the fluid flowing through U-shaped conduit 14, fluid pressure changes, vibration of mounting platform 12, etc. the actual oscillation of U-shaped conduit 14 typically occurs about a changing mid-point as illustrated by the curved line. For instance, when subjected to temperature excursions first in an elevated direction and then in a lowered direction, actual symmetrical oscillation about the nominal static mid-point occurs only at points A, B and C. While actual oscillation would remain symmetrical about the curved line, which is exaggerated for purposes of illustration, it will be seen that the nominal mid-point of oscillation in fact deviates from the actual mid-point under such conditions.

In order to avoid the need for recalibration in response to mid-point drift as a result of such excursions of the mid-point of oscillation as illustrated in Figure 2, flow meter 10 as illustrated in Figure 1 utilises sensors which generate an analogue signal that is substantially a linear function of the actual oscillation of U-shaped conduit 14 as opposed to a digital signal referenced to a structure affixed to the meter's mounting platform. The velocity sensors are preferably spaced from axis (W—W) at connecting portion 22 since these parameters are greatest at such location. Sensors 33 and 33' may also be, and preferably are, located on the outside edges of side legs 18 and 20 rather than on connecting portion 22 as shown in Figure 1.

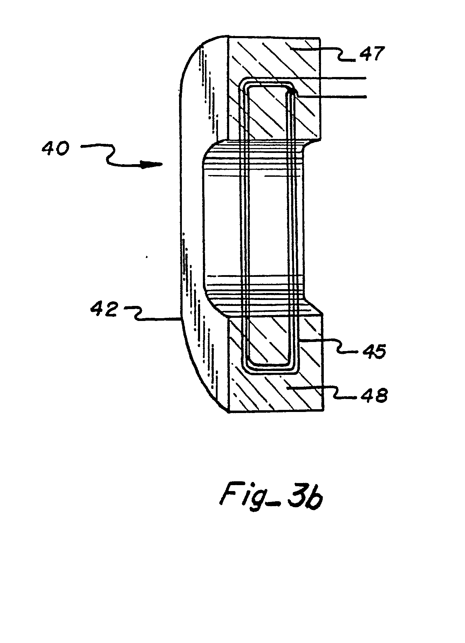

For the purpose of the following discussions, the preferred embodiment of a velocity sensor, as illustrated in Figures 3a and 3b, will be specifically addressed. With reference to Figure 3a, velocity sensor 40 is illustrated and includes a magnet, preferably a permanent magnet, 42 mounted in a fixed manner to mounting platform 12 and a bobbin 44 mounted to U-shaped conduit 14 which carries a coil 45. With reference to Figure 3b, the windings of the coil are adjacent each pole at faces 47 and 48 of magnet 42 such that the coil, except for those straight sections of the coil windings interconnecting the ends at the pole faces, is always in a uniform magnetic flux field. Bobbin 44 is substantially rectangular in shape. U-shaped conduit 14, as illustrated in Figure 3a, reciprocates in a vertical direction. Accordingly, the horizontal windings at the upper and lower portions of coil 45 move orthogonally through a substantially uniform magnetic flux field of magnet 42 thus inducing a potential in coil 45 which is a linear function of the velocity of coil 45 relative to adjacent magnet 42. The pole faces 47 and 48 of magnet 42 are preferably spaced a sufficient distance from each other such that the magnetic flux at each of the faces 47 and 48 is normal to the surface thereof. Magnet 42 is configured such that faces 47 and 48 are of a dimension greater than the greatest oscillation of U-shaped conduit 14 thereby ensuring that the upper and lower portions of coil 45 will be maintained in a uniform magnetic flux field. Preferably faces 47 and 48 are positioned so as to stabilise the gaps relative to coil 45 during oscillation and deflection of U-shaped conduit 14. Of course magnet 42 may alternatively be mounted on U-shaped conduit 14 and bobbin 44 may be fixedly mounted relative to the coil if desired.

Turning now to Figure 4, wherein parallel sensor circuits—one labelled with a prime—are shown, a pair of coils 45 and 45', already described with regard to velocity sensors are illustrated. It will be recognised that the output signals from such coils 45 and 45' are substantially in the form of waves incorporating frequency components made up of those resulting from conduit oscillation driven by mechanism 25, mass flow rate induced Coriolis forces, and those which result from frequency variations in the oscillation caused by ambient sources such as shock, temperature fluctuations, fluid pressure variations, etc. The output from velocity sensor coils 45 and 45' are provided to summing junctions 48 and 48', and from there to integrators 49 and 49', it being understood that several stages of integration may be provided to reduce sensitivity to external vibrations. The outputs from integrators 49 and 49' in turn are connected to low pass filters 50 and 50' which pass the low frequency components of the signals from velocity sensor coils 45 and 45', and in turn provide feedback in negative quantities to summing junctions 48 and 48'. Filters 50 and 50' include resistors 51 and 51', capacitors 52 and 52' and amplifiers 53 and 53' configured in a conventional arrangement as shown. Thus the low frequency components of the signals from velocity sensors 45 and 45' are in effect substantially cancelled from such signals thereby essentially deleting such components from the outputs of integrators 49 and 49'. The outputs from the integrators 49 and 49' are provided through resistors 54 and 54' to amplifiers 55 and 55' which are operated at saturation levels. As is well known, amplifiers 55 and 55' will convert an oscillating wave input to output signals which are clipped waves approximating truncated sawtooth waveform. Comparators 60 and 60' are each connected at one input thereto to the outputs from amplifiers 55 and 55' through resistors 57 and 57', respectively. The reference input to comparators 60 and 60' are connected to a reference voltage through resistors 63 and 63' and to, for instance, ground through resistors 63 and 63' which are of differing values. Accordingly, reference voltage Va is provided to comparator 60 while reference Vb is provided to comparator 60'. In turn, the output from comparator 60, a square wave, is biased to the "ON" position as a function of voltage Va, i.e. switching to the "OFF" position at the bias line a as illustrated with regard to the output from amplifier 55. By the same means, the output signal from comparator 60' is biased to the "OFF" position, i.e. switching at bias line b again as a function of reference voltage Vb. The biasing is adjusted such that, throughout the dynamic range of flow meter 10, sensor 45 provides a rising waveform from comparator 60 prior to the rising waveform from comparator 60' despite full deflection, i.e. full range flow, through U-shaped conduit 14. The square wave outputs from comparators 60 and 60' are provided to readout circuit 70, which is either the same as that described in U.S. patent 4187721, or that described in published *Instruction Manual Model B Mass Flow Meter*, available from Micro Motion Inc., 7070 Winchester Circle, Boulder, Colorado 80301. As will be described below, the readout circuit 70 fundamentally constitutes either an up-down counter as described in detail in U.S. patent 4187721 or an analogue integrator as described in *Instruction Manual Model B Mass Flow Meter*. Both of these circuit approaches are intended to measure the time delays of the rising and falling portions of the square wave signals from comparators 60 and 60' that are input to readout circuit 70.

From Figures 1 to 4 and the above discussion, it is apparent that several significant advantages are afforded by the sensors and circuitries described. For generating analogue signals which are accurate linear functions of the oscillatory motion of U-shaped conduit 14—rather than digital signals that are dependent on a "static" plane referenced to mounting platform 12—provides an improved means to measure the Coriolis forces producing elastic deflection of the U-shaped conduit. Specifically, sensors 33 and 33' provide signals which are linear functions of the actual oscillatory motion of U-shaped conduit 14. In general, a plurality of stages of integration of the output signals of the sensor is preferred, though at extremely high numbers of integration stages, instability may be observed in the circuitry. One skilled in the art will readily recognise the point of diminishing returns in an actual flow meter system.

Velocity sensor 40, illustrated in Figures 3a and 3b, appears to provide an economical and most effective device to serve as sensors 33 and 33'. With one or more stages of integration, at the sensor output, velocity sensor 40 employed in flow meter 10 provides long-term stability over the heretofore most troublesome operating condition, i.e. substantial temperature changes of 200°C or more of the fluid flowing through the U-shaped conduit 14. Even a direct blast with refrigerants upon U-shaped conduit 14 fails to disrupt the sensitivity and accuracy of flow meter 10 other than for a few cycles thereof. The same conditions seriously disrupt the operation of prior oscillating conduit type Coriolis flow meters.

The operation of flow meter 10 will be more readily understood with reference to the signal and timing chart representations of Figures 5 to 8. Discussion of these Figures and the description of the operation of readout circuit 70 is facilitated by noting that circuit 70 fundamentally consists of either an up-down counter as described in U.S. patent 4187721, or an analogue integrator as described in *Instruction Manual Model B Mass Flow Meter*. Since either the up-down counter or the analogue integrator circuit essentially achieve the same purpose, the following discussion of how circuit 70 functions for convenience will not be repeated for the two approaches. Instead the discussion refers to the composite term "counter/integrator", indicating that the functioning as described applies to either.

The outputs of integrators 49 and 49' of Figure 4, as shown in Figure 5, after the extraneous frequency components have been cancelled comprise substantially in phase, identical oscillating waves, under no flow conditions. As a result of the differing reference voltage Va and Vb of comparators 60 and 60' respectively, the square wave signals from comparators 60 and 60' to readout circuit 70 are, as illustrated in Figure 6, at an "ON" level for a longer period with regard to the output from comparator 60'. Thus, the down count/integration which is initiated by the rising edge of the signal from comparator 60, and terminated by the rising edge of the signal from comparator 60' is always a positive quantity with the count/integration signal level indicating the time delay between such events. Similarly, the up-count/integration portion of readout circuit 70, which is initiated by the falling edge of the signal from comparator 60', and terminated upon the falling edge of the output in comparator 60, is also always a positive quantity representative of time delay. As discussed above, this relationship is maintained by adjusting the relative magnitude of reference voltages Va and Vb. Under no flow conditions, the counts/integrations, up and down, are identical.

With reference to Figure 7, it will be seen that the time relationship of the oscillating signals outputted from integrators 49 and 49' is shifted under a flow condition. The relative length of time that the signal from comparator 60 is "ON" does not change, nor does the signal from comparator 60', though the time delay between such changes is shifted as shown in Figure 8. Accordingly, the period during which a down count/integration is recorded in readout circuit 70 versus the period in which an up count/integration is recorded is dissimilar, with the difference between the down count/integration and up count/integration representing mass flow. Put simply, as shown in Figure 6, under a no flow condition, the down count/integration and up count/integration produced by readout circuit 70 are the same, since there is no deflection of U-shaped conduit 14 around the axis (O—O), and readout circuit 70 totalling the down count/integration and up count/integration indicates no flow. On the other hand, when a flow condition exists, as shown in Figure 8, on an up stroke of U-shaped conduit 14, the timing of the square wave signal from comparator 60 is relatively advanced, while that of comparator 60' is retarded, thereby increasing the up count/integration input to readout circuit 70 and decreasing the down count/integration. Mass flow through U-shaped conduit 14 is accordingly a function of the difference in the up and down count/integration as shown in Figure 8.

Typical components employed in one embodiment of the invention are listed in the following table, though of course numerous other components and values would be operable in equivalent and variant designs.

COMPONENT TABLE

| Amplifiers 49, 49', 53 53', 55 and 55' | Motorola type 155 FET Operational Amplifiers |
|---|---|
| Resistors 51 and 51' | 500K ohm, .25 watt CC* |
| Resistors 54 and 54' | 10K ohm, .25 watt CC |
| Resistors 57 and 57' | 1.0K ohm CC |
| Resistors 63 and 63' | 5.6K ohm CC |
| Resistor 65 | 100K ohm CC |
| Resistor 66 | 150K ohm CC |
| Capacitors 52 and 52' | 1 microfarad low leakage |
| Comparators 60 and 60' | National semiconductor No. LM111 |

*Carbon composition

In summary, the present invention addresses the problem of frequency variations in the oscillatory travel of a U-shaped conduit as a result of ambient changes in the physical factors affecting such oscillation. By utilising sensors which generate analogue signals as a linear function of the oscillatory movement of the U-shaped conduit, and preferably with circuitry which integrates, filters and cancels the frequency components from the sensor outputs of such oscillation which correspond to physical variations over period other than that caused by drive mechanism 25, it is possible to provide a stable and accurate mass flow rate meter. In order to minimise sensitivity to external vibrations, it is preferable that the output of the sensors be integrated at least once. When signals are generated in such a manner, i.e. with linear reference to the oscillatory movement of the U-shaped conduit, such signals may be readily converted to square wave outputs and monitored for time delays, corresponding to deflections of the side legs of the conduit due to Coriolis forces, to precisely measure the mass flow rate through the flow meter. The latter aspect, i.e. converting time delay changes into square waves, is substantially identical to the conversion into square waves of the signals from the detection and measurement arrangements described in U.S. patent 4187721, and utilised in commercial devices, wherein deflection due to Coriolis forces in a U-shaped conduit is measured digitally by oscillation sensors which detect the mid-plane of oscillation.

The above discussion and related illustrations of the present invention are directed primarily to preferred embodiments and practices of the invention. However, it is believed that numerous changes and modifications in the actual implementation of the concepts described herein will be apparent to those skilled in the art, and it is contemplated that many such changes and modifications may be made without departing from the scope of the invention as defined by the following claims.

**Claims**

1. A Coriolis force mass flow rate meter comprising a continuous curved conduit (14) through which fluid is to be flowed, the conduit (14) being solidly cantilever mounted at the open ends of leg portions thereof, which conduit (14) is adapted to oscillate about an axis (W—W) passing substantially through the mounting points of the conduit (14) such that, in use, fluid flow through the conduit gives rise to Coriolis forces tending to deflect the conduit (14) about a deflection axis (O—O), further comprising a pair of magnetic velocity sensors (33 and 33') disposed on opposed sides of the deflection axis, means electronically to detect signals from the sensors and convert them to a mass flow rate value, and mass flow readout means, characterised in that the magnetic velocity sensors (33 and 33') are each adapted to generate analogue signal linearly representative of the actual movement of respective sides of the conduit (14) on opposed sides of the deflection axis over the range of movement thereof and the means to detect and convert the signals are adapted to determine, from comparing the waveforms of the signals, the time delay between passage of the said respective sides of the conduit through a predetermined plane of the oscillation pathway of the conduit and to calculate mass flow rate therefrom.

2. A Coriolis force mass flow rate meter according to claim 1 wherein the magnetic velocity sensors each comprise a coil (45) and a magnet (42) defining a gap therebetween and adapted to move relative to each other, one of the coil (45) and the magnet (42) being mounted on the flow meter's mounting platform, and the other of the coil (45) and magnet (42) being mounted on the curved conduit (14).

3. A Coriolis force mass flow rate meter according to claim 1 or 2 in which the magnetic velocity sensors (33 and 33') are mounted symmetrically about the Coriolis deflection axis of the curved conduit (14).

4. A Coriolis force mass flow rate meter according to claim 2 or 3 in which each coil (45) is wound on a rectangular bobbin (44) and at least one of the parallel end portions is always located within the uniform magnetic flux field of one of the pole faces of the adjacent magnet (42), such that the relative motion of the magnet (42) and coil (45) produces a linear electrical signal corresponding to the velocity of such motion.

5. A Coriolis force mass flow rate meter according to any preceding claim in which the output signal of each sensor (33, 33') is connected to integrating means (49, 49') including at least one stage of signal integration to provide isolation from external vibrations, the integration output is further connected to low frequency filter means adapted to separate low frequency components of the integrator output from the components of such signal, and the associated circuitry includes means to feedback these low frequency components of the signal in negative quantities to the integrator input to cancel such components from the output of the integrator, thereby electronically averaging the sensor signals to eliminate these low frequency components as sources of error in the time delay measurement.

6. A coriolis force mass flow rate meter according to any preceding claim in which the curved conduit (14), on which the sensors (33, 33') are fixedly mounted, is oscillated out of phase with an oscillation member (30) that (a) is mounted to the support (26), adjacent the inlet and outlet ends of the conduit (14); and (b) has substantially the same resonant frequency as the conduit (14).

7. A Coriolis force mass flow rate meter according to any preceding claim in which the means to detect and convert the signals comprises a comparator (60, 60') adapted to receive the sensor signal and to switch at a predetermined reference voltage to output a square wave.

8. A method for measuring mass flow rate by detecting deflections caused by Coriolis forces during the resilient oscillation of a continuous curved conduit (14) while fluid is passing through it, wherein the conduit (14) is mounted to a support (26) at its open ends and is caused to oscillate about an axis (W—W) passing substantially through the mounting position, while deflection due to Coriolis force occurs about an axis (O—O) substantially perpendicular to the first axis (W—W) and causes respective sides (18 or 20) of the circuit (14) on opposed sides of the deflection axis to pass through a preselected plane of the oscillation pathway at different times, characterised by;

generating, from a pair of magnetic velocity sensors, analogue signals which are linearly representative of the actual movement of the said respective sides of the conduit (14), over the range of movement thereof,·

detecting the respective continuous signals from each of the sensors (33, 33') and comparing their wave forms, determining from the wave forms the time delay between passage of the said respective sides (18, 20) of the conduit through a preselected plane of the oscillation pathway of the conduit,

and calculating mass flow rate as a function of said time delay.

9. A method of claim 8 in which each signal is fed to a summing junction and is passed through a low frequency filter adapted to pass only the low frequency portions of the signal, and in which such low frequency portions are then fed back to the summing junction to cancel low frequency components from the signal.

10. The method of claim 8 in which each signal is integrated at least once to provide isolation from external vibrations and the integrator output is connected to a low frequency filter adapted to separate and feedback in negative quantities to the integrator input the low frequency components of the integrator output from the conduit oscillating frequency components of such signal so that such components are cancelled from the output of the integrator.

**Patentansprüche**

1. Coriolis-Kraft-Masserdurchflußmesser mit einer durchgehenden gekrümmten Leitung (14), durch die ein Fluid geleitet wird und die mit den offenen Enden ihrer Schenkelabschnitte fest als freitragender Ausleger montiert ist, wobei die Leitung (14) um eine Aches (W—W) schwingen kann, die im wesentlichen durch die Anbringungsstellen der Leitung (14) verläuft, so daß im Betriebsfall ein Fluidfluß durch die Leitung Coriolis-Kräfte entstehen läßt, welche die Leitung (14) um eine Auslenkachse (O—O) auslenkt, ferner mit einem Paar magnetischer Geschwindigkeitssensoren (33 und 33'), die auf gegenüberliegenden Seiten der Auslenkachse angeordnet sind, mit elektronischen Mitteln zum Erfassen von Signalen, die von den Sensoren abgegeben werden, und deren Umsetzen in einen Massedurchflußwert sowie mit einer Massedurchflußableseeinrichtung, dadurch gekennzeichnet, daß die magnetischen Geschwindigkeitssensoren (33 und 33') jeweils zum Erzeugen von Analogsignalen ausgebildet sind, welche in einer linearen Abhängigkeit die augenblickliche Bewegung der entsprechenden Seiten der Leitung (14) auf gegenüberliegenden Seiten der Auslenkachse über deren Bewegungsbereich darstellen, und daß die Mittel zum Erfassen und Umsetzen der Signale so eingerichtet sind, daß sie durch Vergleich der Wellenformen der Signale die Zeitverschiebung zwischen dem Durchgang der entsprechenden Seiten der Leitung durch eine vorher bestimmte Ebene des Schwingungswegs der Leitung bestimmen sowie daraus die Massedurchflußrate errechnen.

2. Coriolis-Kraft-Massedurchflußmesser nach Anspruch 1, dadurch gekennzeichnet, daß die magnetischen Geschwindigkeitssensoren jeweils eine Spule (45) und einen Magneten (42) umfassen, die zwischen sich einen Spalt begrenzen und dazu eingerichtet sind, sich gegeneinander zu bewegen, und daß einerseits die Spule (45) oder der Magnet (42) an der Montageplatte des Durchflußmessers angebracht ist und andererseits umgekehrt der Magnet (42) oder die Spule an der gekrümmten Leitung (14) angebracht ist.

3. Coriolis-Kraft-Masserdurchflußmesser nach Anspruch 1 oder 2, dadurch gekennzeichnet, daß die magnetischen Geschwindigkeitssensoren (33) und 33') symmetrisch zu der Coriolis-Auslenkachse der gekrümmten Leitung (14) angebracht sind.

4. Coriolis-Kraft-Massedurchflußmesser nach Anspruch 2 oder 3, dadurch gekennzeichnet, daß jede Spule (45) auf einen rechteckigen Spulenkörper (44) gewickelt ist und daß wenigstens einer der parallelen Endabschnitte sich immer innerhalb des gleichförmigen magnetischen Feldes einer der beiden Polflächen des benachbarten Magneten (42) befindet, so daß die Relativbewegung des Magneten (42) und der Spule (45) ein lineares elektrisches Signal entsprechend der Geschwindigkeit einer solcher Bewegung erzeugt.

5. Coriolis-Kraft-Massedurchflußmesser nach einem der vorangehenden Ansprüche, dadurch gekennzeichnet, daß das Ausgangssignal jedes Sensors (33, 33') zu einer Integrationseinrichtung (49, 49') geführt ist, die wenigstens eine Signalintegrationsstufe umfaßt, um eine Trennung von äußeren Vibrationen erfolgen zu lassen, daß die Integrationsausgangsgröße weiterhin zu einem Niederfrequenzfilter geführt ist, welcher zum Trennen von niedrigen Frequenzanteilen des Integratorausgungs von den Anteilen eines solchen Signals ausgebildet ist, und daß die zugehörige Schaltungsanordnung eine Rückführung dieser niedrigen Frequenzanteile des Signals mit negativen Vorzeichen zu dem Integratoreingang umfaßt, um solche Bestandteile des Ausgangs des Integrators zum Verschwinden zu bringen, indem diese niedrigen Frequenzbestandteile als Fehlerquellen der Verzögerungsmessung elektronisch ausgemittelt werden.

6. Coriolis-Kraft-Massedurchflußmesser nach einem der vorangehenden Ansprüche, dadurch gekennzeichnet, daß die gekrümmte Leitung (14), an der die Sensoren (33, 33') fest angebracht sind, außer Phase mit einem Schwingungselement (30) schwingt, welches (a) an dem Träger (26) in der Nähe der Eingangs- und Ausgangsöffnungen der Leitung (14) montiert ist und (b) im wesentlichen die gleiche Resonanzfrequenz wie die Leitung (14) aufweist.

7. Coriolis-Kraft-Massedurchflußmesser nach einem der vorangehenden Ansprüche, bei dem die Mittel zum Erfassen und Umsetzen der Signale einen Komparator (60, 60') umfassen, der dazu eingerichtet ist, das Sensorsignal zu empfangen und bei einer vorbestimmten Bezugsspannung umzuschalten, um eine Rechteckwellenform abzugeben.

8. Verfahren zum Messen des Massedurchflusses durch Erfassen von Auslenkungen, welche durch Coriolis-Kräfte während der federnden Schwingung einer durchgehenden gekrümmten Leitung (14) während eines Fluiddurchgangs durch sie erzeugt werden, wobei die Leitung )14) mit ihren offenen Enden an einem Träger (26) montiert ist und zum Schwingen um eine Achse (W—W) angeregt wird, die im wesentlichen durch die Anbringungsstelle verläuft, während eine Auslenkung entsprechend der Coriolis-Kraft um eine Achse (O—O) erfolgt, die im wesentlichen rechtwinklig zu der ersten Achse (W—W) liegt, und entsprechende Seiten (18 oder 20) der Leitung (14) auf gegenüberliegenden Seiten der Auslenkachse veranlaßt, durch eine vorbestimmte Ebene des Schwingungswegs zu verschiedenen Zeiten hindurchzutreten, gekennzeichnet durch: Erzeugung von Analogsignalen von einem Paar magnetischer Geschwindigkeitssensoren, welche Signale ein lineares Maß der Momentanbewegung der entsprechenden Seiten der Leitung (14) über deren Bewegungsbereich darstellen, Erfassen der entsprechenden fortlaufenden Signale von jedem der Sensoren (33, 33') und Vergleichen ihrer Wellenformen, Bestimmen der Zeitverzögerung zwischen dem Durchgang der entsprechenden Seiten (18, 20) der Leitung durch eine vorgewählte Schwingungsebene der Leitung aus den Wellenformen und Errechnen des Massedurchflusses als Funktion der Zeitverzögerung.

9. Verfahren nach Anspruch 8, bei dem jedes Signal zu einer UND-Verknüpfung geführt ist und durch ein Niederfrequenzfilter geleitet wird, welches dazu eingerichtet ist, nur die niedrigen Frequenzanteile des Signals durchzulassen und daß solche niedrigen Frequenz anteile dann zu der UND-Verknüpfung zurückgeführt werden, um die Anteile tiefer Frequenz des Signals zum Verschwinden zu bringen.

10. Verfahren nach Anspruch 8, dadurch gekennzeichnet, daß jedes Signal wenigstens einmal integriert wird, um eine Trennung von äußeren Vibrationen zu bilden und daß der Integratorausgang an ein Niederfrequenzfilter angeschlossen ist, welches dazu eingerichtet ist, die niedrigen Frequenzanteile des Integratorausgangs von den Frequenzbestandteilen der schwingenden Leitung eines solchen Signals zu trennen und mit negativen Vorzeichen zu dem Integratoreingang zurückzuführen, so daß solche (niedrigen Frequenz-)Anteile von dem Ausgang des Integrators zum Verschwinden gebracht werden.

**Revendications**

1. Débitmètre à force de Coriolis comprenant un conduit courbe continu (14) dans lequel il s'agit de faire circuler le fluide, le conduit (14) étant monté rigidement en porte-à-faux aux extrémités ouvertes de ses branches, lequel conduit (14) est adapté pour osciller autour d'un axe (W—W) qui passe pratiquement par les points de montage du conduit (14) de telle manière que, en utilisation, l'écoulement du fluide dans le conduit donne naissance à des forces de Coriolis qui tendent à faire fléchir le conduit (14) autour d'un axe de flexion (O—O), cet appareil comprenant en outre deux capteurs de vitesse magnétiques (33 et 33') disposés de part de d'autre de l'axe de flexion, des moyens destinés à détecter électroniquement les signaux issus des capteurs et à les convertir en une valeur de débit massique, et des moyens de lecture du débit massique, caractérisé en ce que les capteurs de vitesse magnétiques (33, 33') sont adaptés chacun pour engendrer des signaux analogiques qui sont linéairement représentatifs du mouvement réel des côtés respectifs du conduit (14) de part et d'autre de l'axe de flexion, sur l'amplitude de mouvement du conduit et les moyens utilisés pour détecter et convertir les signaux sont adaptés pour déterminer, à partir de la comparaison des formes d'onde des signaux, le retard de temps séparant le passage desdits côtés respectifs du conduit à travers un plan prédétermine de la trajectoire d'oscillation du conduit, et pour calculer le débit massique à partir de ce retard de temps.

2. Débitmètre massique à force de Coriolis selon la revendication 1, dans lequel les capteurs de vitesse magnétiques comprennent chacun une bobine (45) et un aimant (42) définissant un entrefer entre eux et adaptés pour se déplacer l'un par rapport à l'autre, l'un des éléments, la bobine (45) ou l'aimant (42) étant monté sur la plate-forme de montage du débitmètre et l'autre de ces éléments, la bobine (45) ou l'aimant (42) étant monté sur la plate-forme de montage du débitmètre et l'autre de ces éléments, la bobine (45) ou l'aimant (42) étant monté sur le conduit courbé (14).

3. Débitmètre massique à force de Coriolis selon la revendication 1 ou 2, dans lequel les capteurs de vitesse magnétiques (33 et 33') sont montés symétriquement de part et d'autre de l'axe de flexion de Coriolis du conduit courbe (14).

4. Débitmétre massique à force de Coriolis selon la revendication 2 ou 3, dans lequel chaque bobine (45) est bobinée sur un corps de bobine rectangulaire (44) et au moins l'une des parties d'extrémités parallèles est toujours placée dans le champ de flux magnétique uniforme de l'une des faces polaires de l'aimant adjacent (42), de sortie que le mouvement relatif entre l'aimant (42) et la bobine (45) produit un signal électrique linéaire qui correspond à la vitesse de ce mouvement.

5. Débitmètre massique à force de Coriolis selon l'une des revendications précédentes, dans lequel le signal de sortie de chaque capteur (33, 33') est connecté à des moyens d'intégration (49, 49') comprenant au moins un étage d'intégration des signaux pour assurer l'isolation des vibrations extérieures, la sortie d'intégration est en outre connectée à des moyens de filtrage des basses fréquences adaptés pour séparer les composants à basse fréquence de la sortie de l'intégrateur des composantes de ce signal, et le circuit correspondant comprend des moyens pour envoyer en retour ces composantes à basse fréquence du signal en quantités négatives à l'entrée de l'intégrateur pour éliminer ces composantes de la sortie de l'intégrateur, en faisant ainsi la moyenne électronique des signaux des capteurs pour éliminer ces composantes à basse fréquence constituant des sources d'erreur dans la mesure du retard de temps.

6. Débitmètre massique à force de Coriolis selon une revendication précédente quelconque, dans lequel le conduit courbe (14) sur lequel les capteurs (33, 33') sont montés fixes est mis en oscillation hors de phase par rapport à un élément oscillant (30) qui:

(a) est monté sur le support (26) à proximité des extrémités d'entrée et de sortie du conduit (14); et

(b) possède à peu près la même fréquence de résonnance que le conduit (14).

7. Débitmètre massique à force de Coriolis selon l'une quelconque des revendications précédentes, dans lequel les moyens servant à détecter et convertir les signaux comprennent un comparateur (60, 60') adapté pour recevoir le signal du capteur et pour commuter à une tension de référence prédéterminée pour émettre une onde carrée.

8. Procédé de mesure d'un débit massique par détection des flexions provoquées par des forces de Coriolis pendant l'oscillation élastique d'un conduit courbe continu (14) pendant que du fluide passe dans ce conduit, dans lequel le conduit (14) est monté sur un support (26) à ses extrémités ouvertes et est amené à oscillator autour d'un axe (W—W) passant à peu près par la position de montage tandis que la flexion due à la force de Coriolis se produit autour d'un axe (O—O) à peu près perpendiculaire au premier aux (W—W) et amène les côtés respectifs (18 ou 20) du conduit (14) situés de part et d'autre de l'axe de flexion à passer par un plan présélectionné de la trajectoire d'oscillation à différents moments, caractérisé par les phases consistant à:

engendrer, à partir d'une paire de capteurs de vitesse magnétiques des signaux analogiques qui sont linéairement représentatifs du mouvement réel desdits côtés respectifs (14), sur l'intervalle de mouvement de ce conduit;

détecter les signaux continus respectifs issus de chacun des capteurs (33, 33') et comparer leurs formes d'onde, déterminer à partir des formes d'onde le retard de temps entre le passage desdits côtés respectifs (18, 20) du conduit par un plan préalablement choisi de la trajectoire d'oscillation du conduit; et calculer le débit massique en fonction dudit retard de temps.

9. Procédé selon la revendication 8, dans lequel chaque signal est envoyé à une jonction additionneuse et passe à travers un filtre de basse fréquence adapté pour ne laisser passer que les parties à basse fréquence du signal, et dans lequel ces parties à basse fréquence sont ensuite renvoyées en réaction à la jonction additionneuse pour éliminer les composantes à basse fréquence du signal.

10. Procédé selon la revendication 8, dans lequel chaque signal est intégré au moins une fois pour assurer l'isolation vis-à-vis des vibrations extérieures et la sortie de l'intégrateur est connectée à un filtre à basse fréquence adapté pour séparer les composantes à basse fréquence de la sortie de l'intégrateur, des composantes de fréquence d'oscillation du conduit de ce signal et les envoyer en réaction, en quantités négatives à l'entrée de l'intégrateur, de façon que ces composantes soient annulées de la sortie de l'intégrateur.

Fig_2

Fig_1

Fig_3a

Fig_4

Fig_3b

OUTPUTS OF INTEGRATORS 49&49'

*Fig_5*

COMPARATOR 60
COMPARATOR 60'
DOWNCOUNT INTEGRATION
- UPCOUNT INTEGRATION

*Fig_6*

OUTPUT OF INTEGRATOR 49    OUTPUT OF INTEGRATOR 49'

*Fig_7*

COMPARATOR 60
COMPARATOR 60'
DOWNCOUNT INTEGRATION
UPCOUNT INTEGRATION

*Fig_8*